# EUROPEAN PATENT SPECIFICATION

(11) **EP 3 751 035 B1**
(45) Date of publication and mention of the grant of the patent: **20.10.2021**
(21) Application number: 20179459.1
(22) Date of filing: 11.06.2020
(51) Int. Cl.: D03D 49/22, G01L 5/10

(54) **DEVICE FOR SENSING WARP THREAD TENSION IN A WEAVING MACHINE**
VORRICHTUNG ZUM ERFASSEN DER KETTFADENSPANNUNG IN EINER WEBMASCHINE
DISPOSITIF DE DÉTECTION DE TENSION DE FIL DE CHAÎNE DANS UN MÉTIER À TISSER

(30) Priority: 13.06.2019 CZ 20193730
(43) Date of publication of application: 16.12.2020
(73) Proprietor: VÚTS, a.s., Liberec XI - Ruzodol I 460 01 Liberec (CZ)
(72) Inventor: Karel, Petr, 460 01 Liberec, Liberec XI-Ruzodol I (CZ); Zak, Josef, 460 01 Liberec, Liberec XII-Stare Pavlovice (CZ); Bilkovsky, Ales, 460 05 Liberec, Liberec V-Kristianov (CZ)
(74) Representative: Musil, Dobroslav

(56) References cited:
- EP-A1- 0 686 838
- CN-A- 109 706 593
- US-A- 4 690 176

## Description

### Technical field

The present invention relates to a device for sensing warp thread tension in a warp in a weaving machine comprising a sensing bar formed by a rod mountable in the path of warp threads and extending across the entire width of the warp, and further comprising strain gauge sensors.

### Background art

To achieve the required fabric quality in a weaving machine, it is necessary to ensure flawless movement of the warp-fabric system, which involves constant tension in the warp and regular withdrawal of the fabric. Brakes of warp beams or electronic warp regulators are used to maintain tension in the warp, whereby the warp threads being unwound from the warp beam are guided over a back rest which may be fixed, movable on a spring or forcibly driven, the movable back rests being used for controlling the warp regulator.

Sensing individual warp thread tension in the warp is essentially an unsolved problem, since due to the large number of warp threads it is impossible to sense the tension of each individual warp thread separately. Monitoring warp thread tension on the back rest is not accurate, because it corresponds to the total or average tension of the warp threads, which is, moreover, influenced by the actual dynamic behaviour of the back rest. It is impossible to sense, for example, loose warp threads in the middle part of the warp which subsequently cause defects in the fabric or make the actual weaving process impossible.

US5305802 discloses sensing and regulating the tension of a warp for two warps being unwound from two warp beams, wherein each of the warps passes through one arm of a rocker-like sensing bar. What this solution deals with is balancing the tension between the two parts of the warp, not sensing the values of the warp thread tension in the individual parts of the warp.

CZ PV 1957-89 discloses a sensor of tensile forces of warp threads which is formed by a longitudinally cut tube to which strain gauges are glued, one side of the cut tube being attached to a beam body and the other side being in contact with the warp threads. The strain gauges are disposed in the middle part of the bending profile of the longitudinally cut tube. The tube is short and is usually inserted into a part of the warp, although it may be part of the weaving machine. In this solution, the accuracy of tension measurement is problematic.

EP 0 686 838 B1 discloses a device for sensing warp thread tension comprising a holder in which a flexible plate is mounted, below which a strain gauge or piezoelectric sensor is arranged. On the flexible plate is mounted a flexible member which carries a thread guide member. The device is designed to measure the tension of weft and warp threads on a weaving machine. From the guide member, the thread tension force is transmitted to the sensor via two flexible members, which leads to uneven loading of the sensor. In the embodiment according to Fig. 3, a device for measuring the tension of a limited number of threads is described. The device comprises two measuring units and an elongated guide member which is connected at its ends to the flexible members of the measuring units. The device can measure only a part of the warp width, similar to the device according to CZ PV 1957-89. In the embodiment according to Fig. 4, the device for measuring the tension of a plurality of threads comprises one measuring unit, two supports and one elongated thread guide member. The supports are mounted on the flexible members made of silicone rubber and the thread guide member is mounted at its end sections on the flexible members of the supports and is connected to the flexible member of the measuring unit in the next section (in the middle). This reduces the accuracy of the measurement, especially in the case of a wide warp of the weaving machine, and does not enable to determine the distribution of the tension in the individual parts of the warp width, which leads to inaccurate regulation of the warp thread tension.

The object of the invention is therefore to eliminate the drawbacks of the background art and provide a device which will be able to monitor the warp thread tension in the warp along the entire width of the warp.

### Principle of the invention

The object of the invention is achieved by a device according to the invention whose principle consists in that a sensing bar is fixedly mounted on at least three strain gauge sensors which are evenly distributed along the entire length of the sensing bar and are connectable to a back rest beam.

The strain gauge sensors can be distributed along the length of the bar evenly or also unevenly, which, however, requires a more complex calculation of the regulation. The strain gauge sensors give accurate information on the tension of the warp threads guided over the respective area (section) of the sensing bar.

In a specific embodiment, the sensor bar is mounted in clamp mountings which are fixedly mounted on strain gauge sensors which are firmly connectable to the back rest beam by means of holders.

In this case, it is advantageous if the sensing bar consists of a precision polished stainless steel thin-walled tube with high natural frequency and low weight.

### Description of the drawings

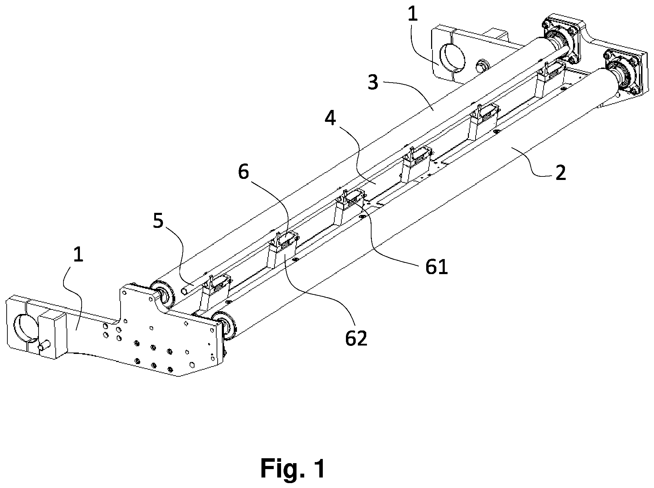

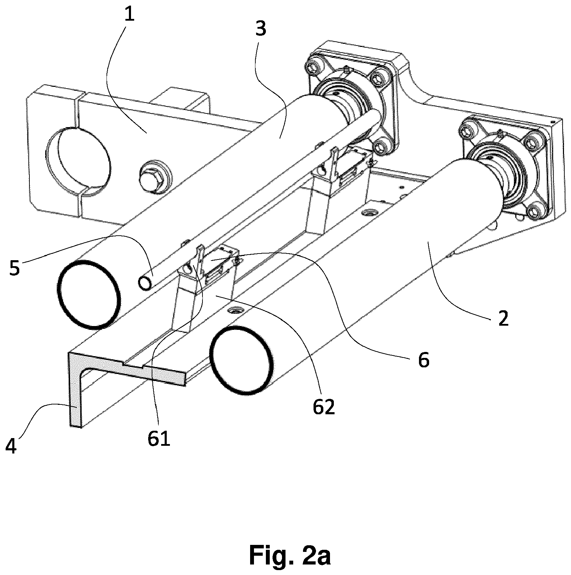

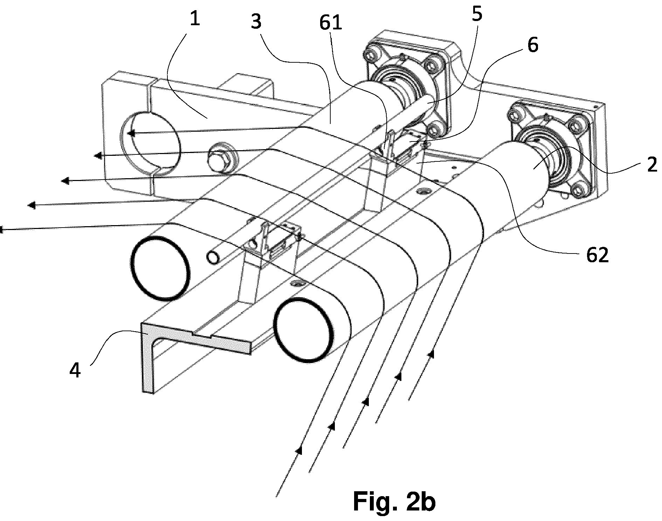

An exemplary embodiment of the device according to the invention is schematically represented in the enclosed drawings, wherein Fig. 1 shows a view of an arrangement of back rest rollers and a sensing bar, Fig. 2a shows a detail of the arrangement of Fig. 1 and Fig. 2b shows a detail of the arrangement of Fig. 2a with warp threads.

### Examples of embodiment

In the exemplary embodiment shown in Fig. 1, a lower back rest roller **2** and an upper back rest roller **3** are rotatably mounted between side frames **1.** The side frames **1** are firmly interconnected by a back rest beam **4.**

As shown in Figs. 2a and 2b, a sensing bar **5** is arranged behind a lower back rest roller **2** and in front of an upper back rest roller **3** in the path of the warp treads which are supplied from a known, unillustrated warp beam. The sensing bar **5** is fixed by means of a clamp mounting **61** of the bar **5** to six strain gauge sensors **6** which are evenly distributed along the entire length of the sensing bar **5** and are firmly mounted by means of a holder **62** of the strain gauge sensor **6** on the back rest beam **4.** The clamp mountings **61** of the bar 5 are mounted on the strain gauge sensors **6.** The strain gauge sensors **6** are connected in a known manner (not shown) to a control system of the weaving machine which evaluates and processes the tension sensed from all the strain gauge sensors **6** and subsequently, according to a selected algorithm, controls a known electronic warp controller (not shown) or the required tension in the warp thread system.

It is not necessary for the strain gauge sensors **6** to be evenly distributed along the length of the sensing bar **5.** This arrangement does not affect the function but requires a more complex calculation for regulation.

In an unillustrated embodiment, only one back rest roller is used in the weaving machine and the sensing bar **5** is arranged in the warp thread path behind this back rest roller.

In another unillustrated embodiment, two warp thread systems are used and one back rest roller is assigned to each of them. In this embodiment, behind each back rest roller **5** one sensing bar is arranged.

The sensing bar **5** is formed by a thin-walled tube with high natural frequency and low weight, for example by a precision polished stainless steel thin-walled tube.

The number of the strain gauge sensors **6** is exemplary and can be changed as required, with a minimum number of three strain gauge sensors **6.**

### Industrial applicability

The present invention can be used in any type of a weaving machine.

### List of references

- 1: side frames
- 2: lower back rest roller
- 3: upper back rest roller
- 4: back rest beam
- 5: sensing bar
- 6: strain gauge sensor
- 61: clamp mounting of the bar
- 62: holder of the strain gauge sensor

## Claims

1. A device for sensing warp thread tension in a warp in a weaving machine, comprising a sensing bar (5) formed by a rod mountable in the path of warp threads to extend across the entire width of the warp and further comprising strain gauge sensors (6), **characterized in that** the sensing bar (5) is fixedly mounted on at least three strain gauge sensors (6) which are distributed along the entire length of the sensing bar (5) and are connectable to a back rest beam (4).

2. The device according to claim 1, **characterized in that** the strain gauge sensors (6) are evenly distributed along the entire length of the sensing bar (5).

3. The device according to claim 1 or 2, **characterized in that the** sensing bar (5) is mounted in clamp mountings (6) which are fixedly mounted on the strain gauge sensors (6), which are firmly connectable to the back rest beam (4) by means of holders (62).

4. The device according to any of the preceding claims, **characterized in that** the sensing bar (5) is formed by a precision polished stainless steel thin-walled tube with high natural frequency and low weight.

## Patentansprüche

1. Einrichtung zum Scannen von Spannung von Kettfäden in einer Kette auf einer Webmaschine, die einen Messstab (5), der durch einen Stab gebildet wird, der in die Bahn von Kettfäden derart montierbar ist, dass er sich über die ganze Breite der Kette erstreckt, und weiter Dehnmessstreifen-Sensoren (6) aufweist, **dadurch gekennzeichnet, dass** der Messstab (5) mindestens auf drei Dehnmessstreifen-Sensoren (6) fest gelagert ist, die auf der ganzen Länge des Messstabes (5) verteilt sind und die an einen Träger (4) eines Spannriegels anschließbar sind.

2. Einrichtung nach dem Anspruch 1, **dadurch gekennzeichnet, dass** die Dehnmessstreifen-Sensoren (6) auf der ganzen Länge des Messstabes (5) gleichmäßig verteilt sind.

3. Einrichtung nach dem Anspruch 1 oder 2, **dadurch gekennzeichnet, dass** der Messstab (5) in den Klemmaufnahmen (61) gelagert ist, die auf den Dehnmessstreifen-Sensoren (6) fest gelagert sind, die mittels der Halter (62) an den Träger (4) des Spannriegels fest anschließbar sind.

4. Einrichtung nach einem der vorangehenden Ansprüche, **dadurch gekennzeichnet, dass** der Messstab (5) durch ein präzises poliertes rostfreies dünnwandiges Rohr mit einem niedrigen Gewicht mit einer hohen Eigenfrequenz gebildet wird.

## Revendications

1. Dispositif de détection de la tension des fils de chaîne dans la chaîne sur une machine à tisser, comprenant une barre de détection (5) constituée d'une tige montée dans le chemin des fils de chaîne de manière à s'étendre sur toute la largeur de la chaîne, et des capteurs de force à jauge de contrainte (6), **caractérisé en ce que** la barre de détection (5) est montée de manière fixe sur au moins trois capteurs de force à jauge de contrainte (6) qui sont répartis sur la longueur de la barre de détection (5) et peuvent être fixés à la poutre (4) de la pince.

2. Dispositif selon la revendication 1, **caractérisé en ce que** les capteurs de force à jauge de contrainte (6) sont répartis uniformément sur la longueur de la barre de détection (5).

3. Dispositif selon la revendication 1 ou 2, **caractérisé en ce que** la barre de détection (5) est montée dans des supports de serrage (61) qui sont montés de manière fixe sur les capteurs de force à jauge de contrainte (6) qui peuvent être montés de manière fixe à la poutre (4) de la pince par l'intermédiaire de supports (62).

4. Dispositif selon l'une des revendications précédentes, **caractérisé en ce que** la barre de détection (5) comprend un tube précis en acier inoxydable poli à paroi mince de faible poids et avec une fréquence naturelle élevée.
